# EUROPEAN PATENT SPECIFICATION

(11) **EP 0 757 953 B1**
(45) Date of publication and mention of the grant of the patent: **12.07.2000**
(21) Application number: 96112739.6
(22) Date of filing: 07.08.1996
(51) Int. Cl.: B62M 23/02

(54) **Power-assisted bicycle**
Hilfsantrieb für Fahrräder
Bicyclette à assistance motorisée

(30) Priority: 08.08.1995 JP 22482095
(43) Date of publication of application: 12.02.1997
(73) Proprietor: YAMAHA HATSUDOKI KABUSHIKI KAISHA, Iwata-shi Shizuoka-ken, 438 (JP)
(72) Inventor: Yokoyama, Yoshiharu, Iwata-shi, Shizuoka-ken, 438 (JP)
(74) Representative: Grünecker, Kinkeldey, Stockmair & Schwanhäusser Anwaltssozietät

(56) References cited:
- EP-A- 0 636 538
- WO-A-89/08579
- FR-A- 2 532 607
- US-A- 4 026 374
- US-A- 4 026 375

## Description

This invention relates to a power-assisted bicycle comprising front and rear wheels supported by a frame, a human power device having a pedal crankshaft provided with respective crank arms and pedals, an internal combustion engine having a carburettor provided with a throttle valve for power assistance, a resultant force device for combining both the output of the human power device and of the internal combustion engine, an interlock means for interlocking the throttle valve of said carburettor with the pedal crankshaft to increase or to decrease, respectively, the throttle valve opening in response to an increase or decrease, respectively, of the output of said human power device, and restriction means for restricting movement of the throttle valve.

The engine-assisted bicycle described above is known from US-A-4 026 374 and is conventionally constituted as described below.

The front and rear wheels are bearing-supported with the vehicle frame of the bicycle. The pedal crankshaft is rotatably bearing-supported with the vehicle frame with both axial ends of the pedal crankshaft respectively provided with projecting crank arms. The crank arms project radially outward of the pedal crankshaft in directions opposite to each other. The projecting ends of the crank arms are provided with bearing-supported pedals. The pedal crankshaft is rotated by pedaling force applied to the pedals or to the pedal crankshaft. An engine is supported with the vehicle frame to drive the wheels for running. A carburettor is provided to supply mixture to the engine.

The power of the pedaling force and the power of the engine are combined together and transmitted to the rear wheel so that the physical effort of the rider to run the bicycle is alleviated.

Moreover, US-A-4 026 374 discloses a dashpot means, i.e. a damper. This damper is operative in the forward direction as well as in the backward direction. In other words, damping occurs not only when reducing the pedalling force but also when increasing it. Accordingly, an instant increase of speed of the bicycle in response to an increase in pedalling force is not possible but somewhat delayed so that the riding sensation of the prior art bicycle is far away from the riding sensation a rider would obtain on a normal bicycle.

With the conventional art, the power of the engine is regulated by changing the throttle valve opening by the twisting operation of the handlebar grip by the hand gripping the handlebar. However, such an operation is not required of ordinary bicycle riders and is cumbersome, especially for those who do not have experience of riding a motorcycle.

Therefore, it is conceivable to employ interlock means to interlock the throttle valve of the carburettor with the pedal crankshaft so that the throttle valve opening is increased or decreased with the increase or decrease in the pedaling force, namely the engine power is increased or decreased with the increase or decrease in the pedaling force without operating the handlebar grip.

Such an arrangement, however, may invite the following problems.

First, the pedaling force becomes the maximum in the middle between the top dead center and the bottom dead center of the pedal rotation in front of the rotation center and Is almost zero while the pedal moves from the bottom dead center to the top dead center. That is to say, the pedaling force repeats increase and decrease cycle every half turn of the pedal crankshaft. As a result, the throttle valve opening repeats increase and decrease cycle every half turn of the pedal crankshaft, the engine power changes during the half turn of the pedal crankshaft, the bicycle runs jerkily, and the ride feeling on the bicycle is impaired.

Second, when the bicycle is stopped and standing with the wheels braked by manual operation of the brake device, there may be a situation in which a foot is placed on a pedal and a pedaling force is applied unconsciously on the pedal. If such a situation occurs with the constitution described above, the throttle valve is opened according to the pedaling force and an unnecessary, undesirable power is produced with the engine.

Accordingly, it is an objective of the present invention to provide an improved power-assisted bicycle as indicated above which is easy to handle by facilitating with simple technical means the operation of running and in addition provides a riding sensation of a normal bicycle, i.e. one without motor-assist.

According to the invention, this objective is solved for a power-assisted bicycle as indicated above in that said restriction means restrict the decrease of the throttle valve opening which is caused by a decrease in pedalling force, but allow unrestricted increase of the throttle valve opening when the pedalling force is increased, whereby the decrease of the throttle valve opening occurs at a speed slower than that when the throttle valve opening is increased.

In case the resultant force device comprises a planetary gear mechanism, it is advantageous when a sun gear of this planetary gear mechanism is engagable by said restriction means.

According to an advantageous embodiment of the invention said rotation restriction means comprises a swing arm supported by a pivot shaft, one end of said swing arm is capable of coming into pressing contact with said sun gear by means of an urging means, whereas the other end of said swing arm is interlocked with said throttle valve.

A technical simple and reliable restriction means comprises comprises a cylinder having an axially slidable piston, said piston is provided with a piston rod projecting from said cylinder for coming into contact with said sun gear and dividing said cylinder into a first chamber opposite to said piston rod and into a second chamber at the piston rod side of said piston.

The reduction of unnecessary power production may be further enhanced by an interlock cancelling means for interrupting the interlock between the throttle valve and the pedal crankshaft in response to the operation of the brake device detected by a brake detection means.

In case the interlock means comprises a wire and a sheath it is advantageous when said interlock cancelling means is interposed between respective ends of said wire and said sheath, respectively.

According to a preferred embodiment of the invention said interlock cancelling means has an interlock cancelling mechanism comprising a cylindrical body, both axial ends of which are connected to the respective ends of said sheath, a movable set slidingly received within said cylindrical body for a movement in axial direction of said cylindrical body and connected to the respective ends of said wire, and a means for operating said movable set to interrupt or activate, respectively, the interlock between the throttle valve and the pedal crankshaft.

In that case, it is possible that said movable set comprises a cylindrical movable body, a rod-shaped projecting member capable of coming out and retracting into one end of the movable body by means of an electric motor disposed within said movable body via a screw jack, whereas one end of the respective ends of said wire is connected to an end of said movable body and the other end of said respective ends of the wire is disengagably connected to the projecting end of said projecting member.

Other preferred embodiments of the present invention are laid down in further dependent claims.

In the following, the present invention is explained in greater detail with respect to several embodiments thereof in conjunction with the accompanying drawings, wherein:

FIG. 1 is a partial enlarged cross-sectional view of FIG. 2.

FIG. 2 is an overall side view of a bicycle partially broken away.

FIG. 3 is a partial, cross-sectional plan view of the parts shown in FIG. 1.

FIG. 4 is a partial enlarged cross-sectional view of FIG. 1.

FIG. 5 is a graph showing the relationship between the pedaling force and the throttle valve opening.

FIG. 6 is a graph showing the relationship between the pedaling force and the engine power.

FIG. 7 shows cross sections illustrating the function of the interlock canceling mechanism of the interlock canceling means.

FIG. 8 shows an electric circuit of the interlock canceling means.

FIG. 9 shows an electric circuit of the interlock canceling means.

An embodiment of the invention will be described in reference to the appended drawings.

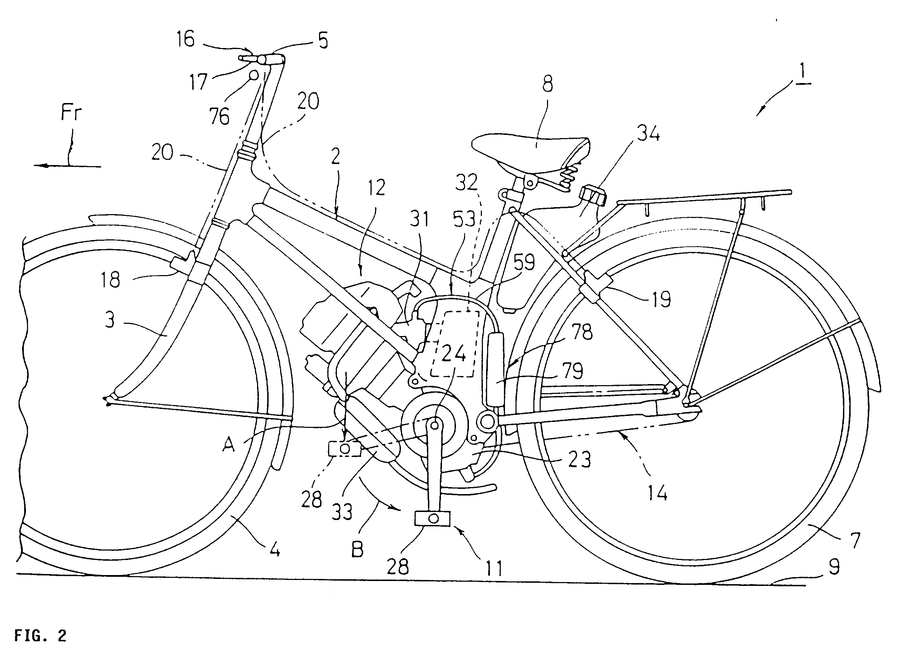

FIG. 2 shows an engine-assisted bicycle (1) for running in the direction of the arrow (Fr).

A steerable front fork (3) is bearing-supported at the front end of a vehicle frame (2) of the bicycle (1). A front wheel (4) is rotatably bearing-supported with the lower end of the front fork (3). Handlebars (5) are atached to the top end of the front fork (3). A rear wheel (7) is rotatably bearing-supported with the rear end of the vehicle frame (2). A saddle (8) is attached to the longitudinal middle position of the vehicle frame (2) for a rider to sit on.

A driving device is provided to enable the bicycle (1) to run on the road surface (9). The driving device is provided with a human power device (11) operated by the physical power of the rider, an (internal combustion) engine (12) supported with the frame (2), and a resultant force device (13) for combining together power from the human power device (11) and the engine (12) and outputting the resultant power. The power outputted from the resultant force device (13) Is transmitted through chain transmission means or power transmission means (14) to the rear wheel (7) to rotate it on the road surface (9) and to cause the bicycle (1) to run on the road surface (9).

A manually operated brake device (16) is provided for braking the rotation of the front and rear wheels (4, 7). The brake device (16) is constituted with; paired right and left operation levers (17) respectively provided on the handlebars (5), caliper brakes or brake units (18, 19) respectively provided near the front and rear wheels (4, 7), and cables (20) for connecting the brake units (18, 19) respectively to the operation levers (17). When the operation levers (17) are operated for braking by hand, the manual forces are transmitted to the brake units (18, 19) which brake the wheels (4, 7).

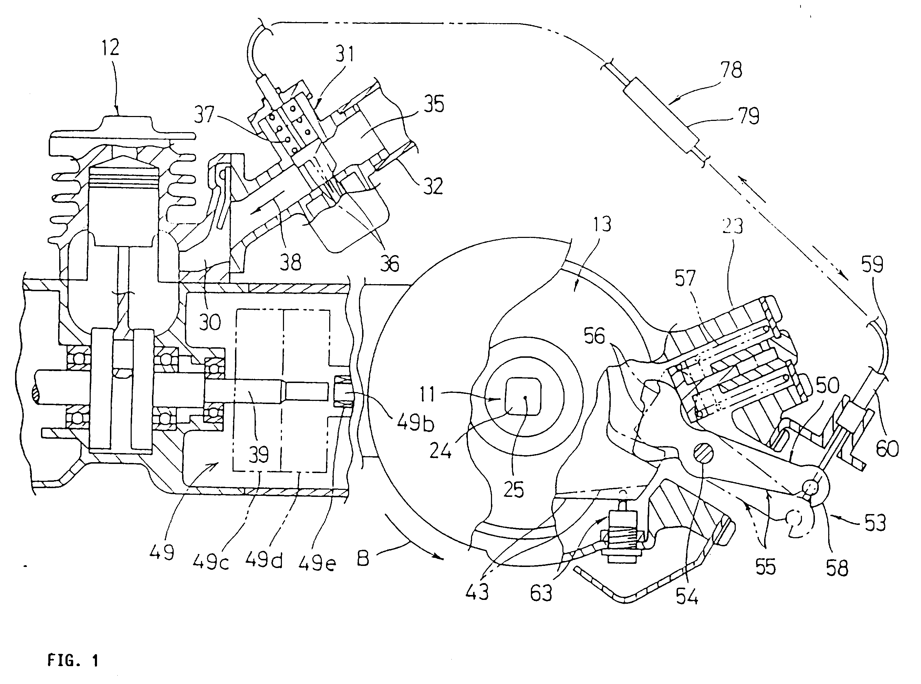

Referring to FIGs. 1 through 3, the human power device (11) has a casting-made housing (23) supported with the vehicle frame (2). The housing (23) bearing-supports the pedal crankshaft (24). The pedal crankshaft (24) is bearing-supported for free rotation about an axis (25) laterally extending with respect to the housing (23).

To both ends of the pedal crankshaft (24) are attached respectively crank arms (27) extending in radially outward directions opposite to each other. Pedals (28) are respectively bearing-supported at the projecting ends of the crank arms (27).

Usually, a pedaling force (A) is applied by the rider sitting on the saddle (8) to the pedal (28) when the pedal (28) is moving from its top dead center to the bottom dead center on the forward side of the axis (25). The pedaling force (A) reaches a maximum value in the middle of the movement (as shown in phantom lines in FIG. 2). The pedaling force (A) is almost zero while the pedal is moving from its bottom dead center to the top dead center behind the axis (25).

When the pedaling force (A) is repeatedly applied by turns to the right and left pedals (28), the pedals (28) rotate about the axis (25) in the normal direction (B). Along with the rotation of the pedals (28), the pedal crankshaft (25) is also rotated through the crank arms (27) about the axis (25) in the normal direction (B).

The engine (12) is a forced air-cooled, pre-compressed type, two cycle engine, with its intake port (30) connected to a carburettor (31) which in turn is connected to an air cleaner (32). A muffler (33) is connected to an exhaust port. The carburettor (31) is provided with a fuel tank (34) for supplying fuel to the carburettor (31).

The carburettor (31) is provided with a throttle valve (36) for opening and closing an intake passage (35) of the carburettor (31). A spring or urging means (37) is provided for resiliently forcing the throttle valve (36) to close the intake passage (35). When the throttle valve (36) is not operated, the urging means (37) causes the throttle valve (36) to close the intake passage (35) almost fully as shown with solid lines In FIG. 1.

When the throttle valve (36) is operated to increase the opening of the intake passage (35) against the resilient force of the urging means (37), the amount of air and fuel as mixture taken into the engine (12) increases and the power outputted from the engine (12) through the crankshaft (39) increases.

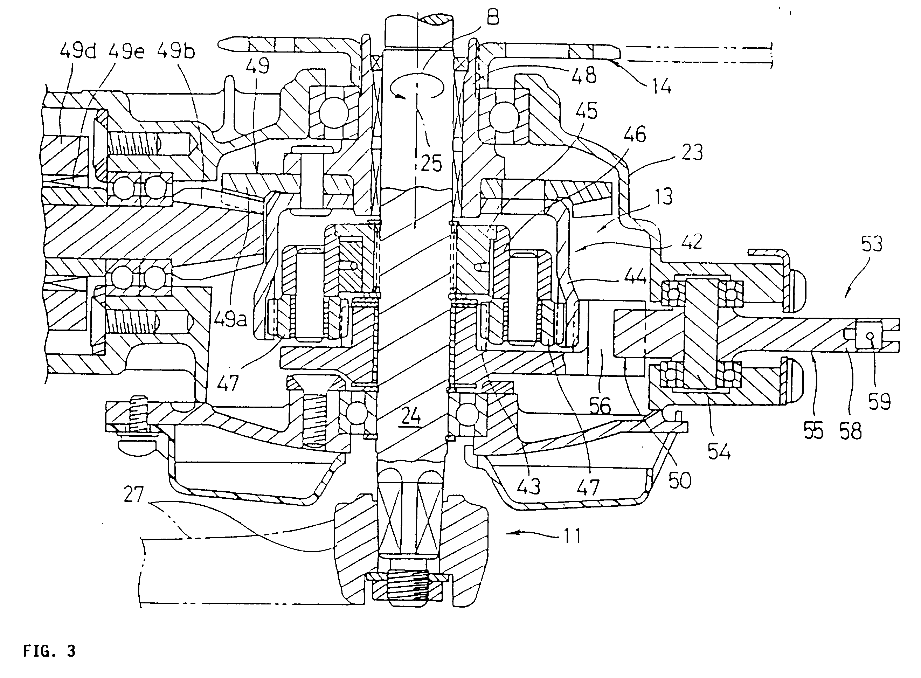

Referring to FIG. 3 in particular, the resultant force device (13) is provided with a planetary gear mechanism (42) or a speed increasing device housed in the housing (23). The planetary gear mechanism (42) comprises; a sun gear (43) and a ring gear (44) supported on the crankshaft (24) for planetary rotation about the axis (25) of the crankshaft (24), a carrier (46) supported through a one-way clutch (45) on the crankshaft (24), and a plurality of pinions (47) supported on the carrier (46) and meshing with the sun gear (43) and the ring gear (44). The pinions (47) are rotatable about their respective axes.

A resultant force shaft (48) is supported with the housing (23) so as to be rotatable about the axis (25). The ring gear (44) is connected to the resultant force shaft (48) for rotation in a body. The resultant force shaft (48) is interlocked to the rear wheel (7) through the power transmission means (14).

The one-way clutch (45) transmits the power of the pedal crankshaft (24) to the carrier (46) only when it rotates in the normal direction (B) so that the carrier (46) accompanied by the pinions (47) rotates in the normal direction (B) about the axis (25). In other words, the one-way clutch (45) prevents power from being transmitted from the engine (12) to the pedal crankshaft (24).

The crankshaft (39) of the engine (12) is provided with power transmission means (49) for interlocking the ring gear (44) and the resultant force shaft (48) together. The power transmission means (49) comprises; a driven bevel gear (49a) riveted to the ring gear (44) and the resultant force shaft (48) for rotation together with those components, a drive bevel gear (49b) supported with the housing (23) and meshing with the driven bevel gear (49a), a centrifugal clutch (49c) interposed between the crankshaft (39) and the driven bevel gear (49b), a planetary gear mechanism (49d) of a speed reduction type, and another one-way-clutch (49e).

When the engine (12) is in operation and the rotation speed of the crankshaft (39) exceeds a specified value (idling speed), the centrifugal clutch (49c) which has been in a disengaged state automatically works to engage to transmit the engine power to the ring gear (44) and the resultant force shaft (48) through the centrifugal clutch (49c), the planetary gear mechanism (49d), the one-way-clutch (49e), the drive bevel gear (49b), and the driven bevel gear (49a), so that the ring gear (44) and the resultant force shaft (48) are rotated in the normal direction (B) about the axis (25). The one-way clutch (49e) prevents power from being transmitted from the pedal crankshaft (24) side to the engine (12) side in the event of failure of the engine (12).

Rotation restriction means (50) is provided for restricting the sun gear (43) from freely rotating in the normal direction (B) about the axis (25).

When the pedaling force (A) is repeatedly applied by turns through pedaling on the pedals (28) of the human power device (11) to the pedal crankshaft (24) and the engine (12) is operated, the power transmitted from the pedal crankshaft (24) of the human power device (11) to the ring gear (44) and the power transmitted from the engine (12) to the driven bevel gear (49a) are combined together on the resultant force shaft (48) into a "resultant power" which is transmitted to the rear wheel (7) through the power transmission means (14) to enable the bicycle (1) to run on the road surface (9).

As shown in FIGs. 1 through 3, interlock means (53) is provided to interlock the pedal crankshaft (24) with the throttle valve (36) of the carburettor (31).

The interlock means (53) comprises the rotation restriction means (50) which has a swing arm (55) supported on the housing (23), which is on the vehicle frame (2) side, by means of a pivot shaft (54). To restrict the sun gear (43) from rotating in the normal direction (B), one end (56) of the swing arm (55) is brought into pressing contact with part of the sun gear (43) by means of urging means (57) or a spring.

The other end (58) of the swing arm (55) is interlocked through a wire (59) with the throttle valve (36). The wire (59) is passed through a sheath (60) so as to be slidable relative to the sheath (60) in its longitudinal direction. One end of the sheath (60) is connected to the housing (23) while the other end is connected to the carburettor (31).

When the bicycle (1) is running and the pedals (28) come to the top and bottom dead centers as shown in FIG. 2, the pedaling force becomes almost zero. As a result, the sun gear (43) is pushed in the direction opposite the normal rotation (B) through one end (56) of the swing arm (55), rotated in the reverse direction, and returned to the initial position. Here, the other end (58) of the swing arm (55) does not pull the wire (59) against the urging means (37). As a result, the swing arm (55) is brought to a "tension-free state" as shown with solid lines in FIG. 1.

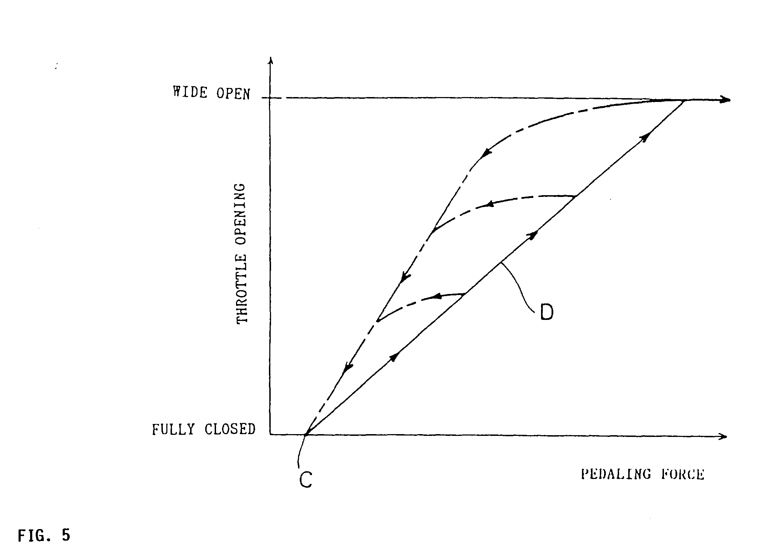

When the swing arm (55) is in the "tension-free state," the throttle valve (36) is not pulled through the wire (59) with the other end (58) of the swing arm (55), and the opening of the throttle valve (36) is made small with the urging force of the urging means (37) as shown with solid lines in FIG. 1, and the point (C) shown in FIG. 5.

When the pedaling force (A) applied to the pedal (28) is gradually increased as the pedal (28) moves from its top dead center down forward toward the middle position, the sun gear (43) is rotated in the normal direction (B) as shown with phantom lines in FIG. 1 in proportion to the pedaling force (A) against the urging forces of both urging means (37, 57). As a result, the sun gear (43) pushes the swing arm (55) to swing. Here, the other end (58) of the swing arm (55) is brought to a "tension state" as shown with phantom lines in FIG. 1.

When the swing arm (55) is in the "tension state," the throttle valve (36) is pulled with the other end (58) of the swing arm (55) through the wire (59) to increase the throttle opening in proportion to the pedaling force (A) as shown with phantom lines in FIG. 1, and the solid line portion (D) shown in FIG. 5.

When pedaling on the pedal (28) is continued from the middle position toward the bottom dead center of the pedal travel and the pedaling force is gradually decreased, the swing arm (55) approaches the "tension-free state" and the throttle opening is decreased with the throttle valve (36) urged by the urging force of the urging means (37) to return to the original opening as shown with the point (C) in FIG. 5.

That is to say, the opening of the throttle valve (36) is automatically adjusted to increase or decrease approximately in proportion to the increase or decrease in the pedaling force (A), to alleviate the physical effort of the rider. At the same time, operation of the engine (12) is automatically adjusted by the operation on the pedal crankshaft (24).

As shown in FIGs. 1 through 4, an opening decrease restriction means (63) is provided to restrict the decrease in the opening of the throttle valve (36) associated with the decrease in the pedaling force (A) onto the pedal (28).

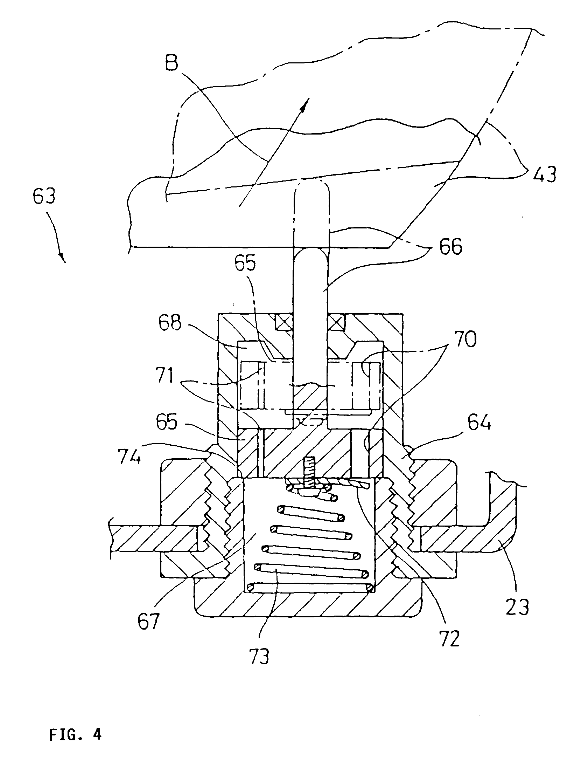

The opening decrease restriction means (63), as shown in FIG. 4 in particular, has a cylinder (64) attached to the housing (23) which is on the vehicle frame (2) side. An axially slidable piston (65) is inserted into the cylinder (64). A piston rod (66) connected to the piston (65) projects from the cylinder (64). Two chambers (67, 68) defined with the piston (65) within the cylinder (64) are filled with oil.

The piston (65) is formed with a larger diameter hole (70) and a smaller diameter hole (71) for making fluid connection between the two chambers (67, 68). A reed valve (72) is provided to open and close the larger diameter hole (70) on the chamber (67) side. A spring (73) is provided for urging the piston (65) resiliently in the direction of making the piston rod (66) project from the cylinder (64).

The projecting end of the piston rod (66) is brought into contact with the sun gear (43) by the urging force of the spring (73) so as to urge the sun gear (43) in the direction (B) of the normal rotation.

As shown with solid lines in FIGs. 1 and 4, when the pedaling force (A) on the pedal (28) is zero and the sun gear (43) is in the initial position as it is rotated in the reverse direction by the urging force of the urging means (57) as described above, the piston rod (66) is pressed with the sun gear (43) against the spring (73) into the cylinder (64). This makes the volume of the chamber (67) small. Here, the sun gear (43) is prevented from reverse rotation beyond the initial position shown with solid lines as the piston (65) comes into contact with a stop (74) formed in the cylinder (64).

When the pedaling force (A) on the pedal (28) is increased from the state described above, the sun gear (43) is rotated in the normal direction (B) as shown with phantom lines in FIGs. 1 and 4 in proportion to the pedaling force (A). Along with this rotation, the piston rod (66) is made to project from the cylinder (64) by the urging force of the spring (73). This state corresponds to the portion (D) of the curve shown in FIG. 5.

When the piston rod (66) projects, the piston (65) slides within the cylinder (64) to increase the volume of the chamber (67). Here, differential pressure between one chamber (67) and the other chamber (68) automatically causes the reed valve (72) to open the larger diameter hole (70). As a result, oil in the chamber (68) flows smoothly into the chamber (67) through the larger diameter hole (70). Therefore, the piston (65) slides smoothly. That is to say, the piston (65) and the piston rod (66) promptly follows the rotation of the sun gear (43) in the normal direction (B) without delay.

When the pedaling force (A) on the pedal (28) is decreased from the state described above, the sun gear (43) is rotated with the urging means (57) in the reverse direction as shown with solid lines in FIGs. 1 and 4 as described before, and the piston rod (66) is pushed with the sun gear (43) into the cylinder (64).

At this time, the piston (65) slides within the cylinder (64) to decrease the volume of the chamber (67). Here, the differential pressure between the chambers (67, 68) automatically causes the larger diameter hole (70) to close and the oil in the chamber (67) flows only through the smaller diameter hole (71) into the chamber (68).

The smaller diameter hole (71) is made with a very small diameter and therefore the flow resistance of oil through the smaller diameter hole (71) is great to restrict the sliding of the piston (65). Therefore, the reverse rotation of the sun gear (43) is restricted. That is to say, the sun gear is rotated in the reverse direction at a slow, lower speed than that in the normal direction (B). Therefore, the decrease in the opening of the throttle valve (36) interlocked through the swing arm (55) and the wire (59) with the sun gear (43) is also restricted. That is to say, the decrease in the throttle valve (36) opening according to the decrease in the pedaling force (A) on the pedal (28) is restricted. Therefore, the decrease in the throttle valve (36) opening occurs as shown with phantom lines in FIG. 5 at a speed slower than that when the opening is increased.

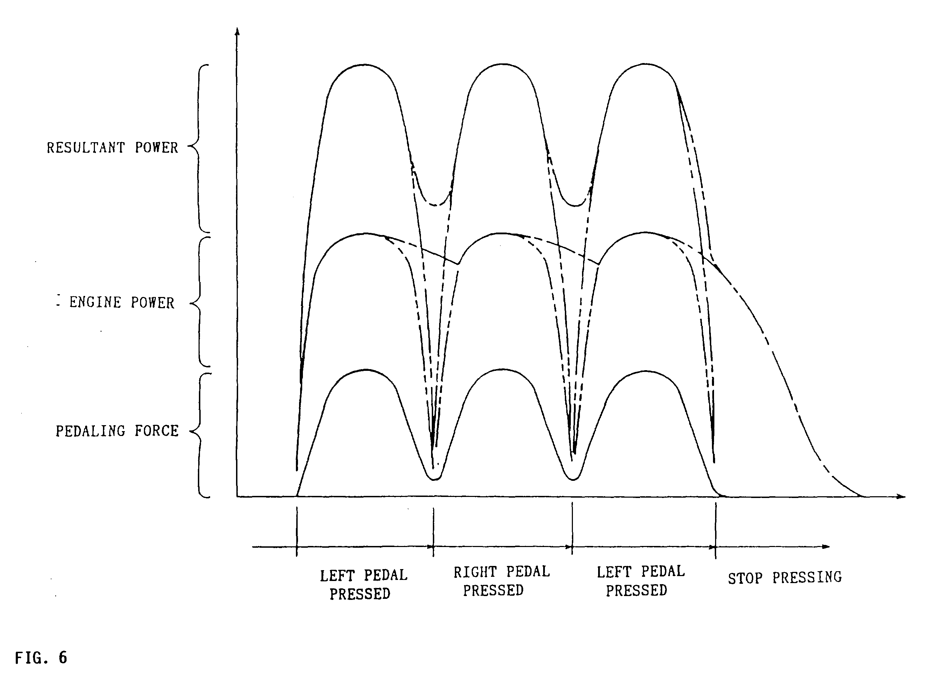

Referring to FIG. 6, when the bicycle (1) is run, the rider repeatedly presses the right and left pedals (28) by turns to apply the pedaling force (A) onto the pedals (28). The swing arm (55) swings in proportion to the pedaling force (A) to change the opening of the throttle valve (36) and the power output from the engine (12).

Here, while the right and left pedals (28) are depressed by turns by the rider and the pedaling force (A) transmitted to the pedal crankshaft (24) increases and decreases repeatedly, when the pedaling force is on the decrease, the decrease in the throttle valve (36) opening is restricted with the opening decrease restriction means (63), and the decrease in the power of the engine (12) is restricted when the pedaling force (A) turns into the decrease. In other words, the decrease in the "resultant power" is restricted as shown with a dash-and-dotted curve in FIG. 6.

In the conventional arrangement, when the pedaling force (A) turns into the decrease, the throttle (36) opening also decreases accordingly. Therefore, when the engine (12) power decreases suddenly, the "resultant power" also decreases suddenly. In this embodiment, however, jerky run of the bicycle (1) is prevented to improve the ride feeling on the bicycle (1).

Referring to FIGs. 1, 2, and 7 through 9, the bicycle (1) is provided with a power source or a battery (75). Brake detection means (76) is also provided to detect the operation of the brake device (16). The brake detection means (76) is turned on when at least one of the operation levers (17) is operated for braking and outputs a detection signal.

Interlock canceling means (78) is provided for canceling the interlock of the throttle valve (36) established with the interlock means (53).

The interlock canceling means (78) will be described below.

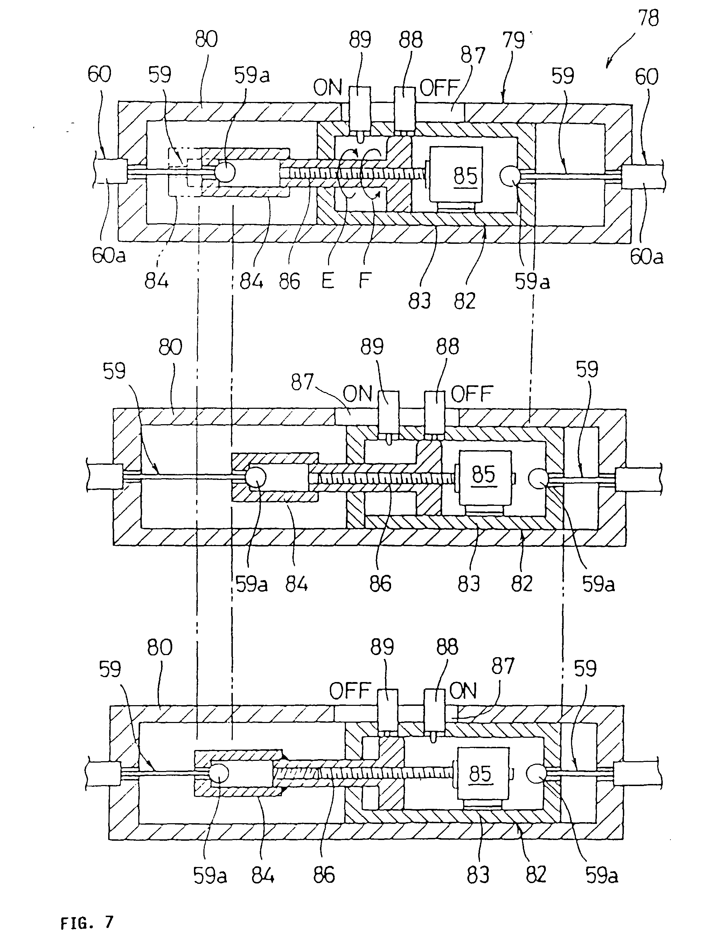

Referring to the top drawing of FIG. 7, the wire (59) and the sheath (60) are divided in the middle of their lengths and an interlock canceling mechanism (79) is interposed between division ends (59a) and (60a) of the wire (59) and the sheath (60). The interlock canceling mechanism (79) comprises a cylindrical body (80) with its both axial ends connected to the division ends (60a) of the sheath (60) respectively.

A movable set (82) is inserted for sliding in the axial direction in the interlock canceling mechanism (79). The movable set (82) comprises a cylindrical movable body (83), a rod-shaped projecting member (84) capable of coming out from and retracting into one end of the movable body (83), an electric motor (85) supported with the movable body (83) and rotatable in both normal and reverse directions, and a screw jack (86) making connection between the projecting member (84) and the output shaft of the electric motor (85). One (59a) of the division ends (59a, 59a) of the wire (59) is connected to the other end of the movable body (83) while the other division end (59a) is disengageably engage-stopped with the projecting end of the projecting member (84).

When the electric motor (85) is rotated in the normal direction (E), the screw jack (86) is actuated to retract the projecting member (84) toward the movable body (83) as shown with solid lines in the top drawing of FIG. 7, and the division end (59a) of the wire (59) is engage-stopped with the projecting end of the projecting member (84). That is to say, the projecting member (84) is brought to the "engage-stopped state." When the projecting member (84) is in the "engage-stopped state," the interlock means (53) causes the pedal crankshaft (24) to interlock with the throttle valve (36) to adjust the throttle opening commensurate with the "tension state" of the swing arm (55) as described before.

When the electric motor (85) is rotated in the reverse direction (F), the screw jack (86) is actuated to cause the projecting member (84) to project from the movable body (83) as shown with the phantom lines in the top drawing of FIG. 7, and the engagement of the division end (59a) of the wire (59) with the projecting end of the projecting member (84) is released. That is to say, the projecting member (84) is brought to the "disengaged" state. When the projecting member (84) is in the "disengaged" state, the interlock between the throttle valve (36) and the pedal crankshaft (24) caused by the interlock means (53) is released whether the swing arm (55) is in the "tension" or "tension-free" state, and the throttle valve (36) is fully closed and held by the urging force of the urging means (37).

The interlock canceling means (78) is provided with a first switch (88) and a second switch (89). The first switch (88) is turned off when the projecting member (84) is in the "engage-stopped state" and turned on in the "disengaged state." On the contrary, the second switch (89) is turned on when the projecting member (84) is in the "engage-stopped state" and turned off in the "disengaged state." Here, a slot (87) is formed on the cylindrical body (80) so that the first and second switches (88, 89) moving together with the movable body (83) does not come in contact with the cylindrical body (80) when the movable body (83) slides relative to the cylindrical body (80).

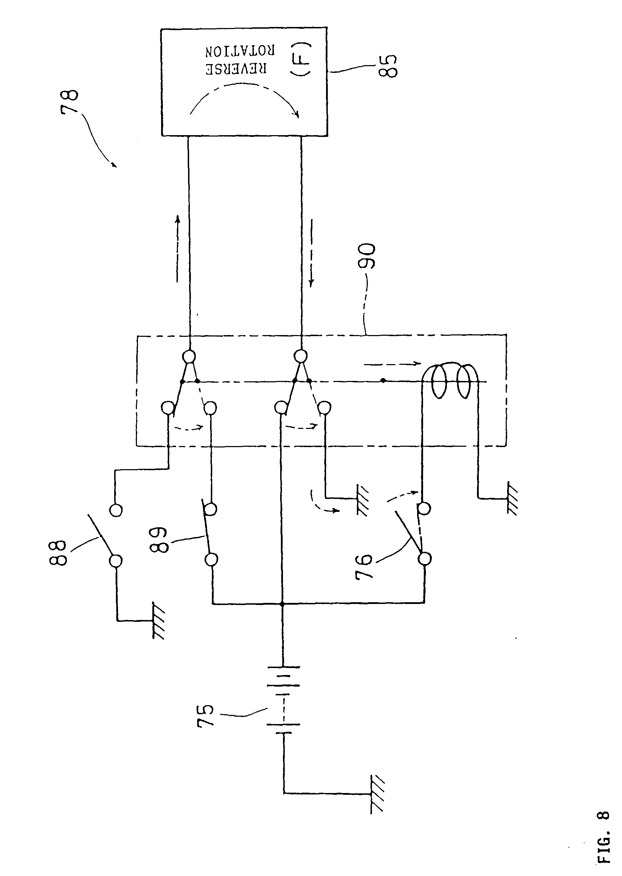

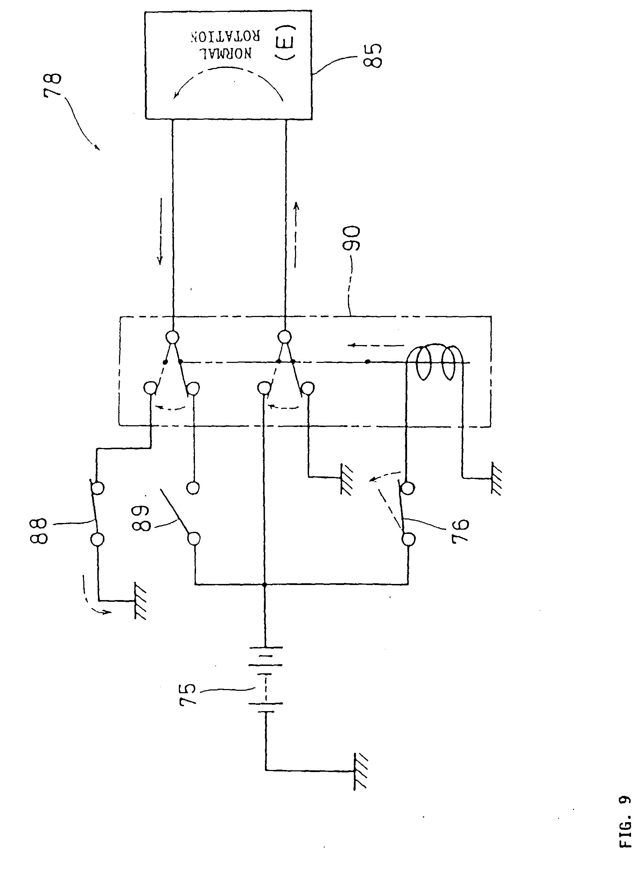

As shown in FIGs. 8 and 9, the battery (75), the brake detection means (76), the electric motor (85), the first switch (88), the second switch (89), and a relay (90) are electrically interconnected.

In the state shown in the top drawing of FIG. 7 and in FIG. 8 with solid lines, the bicycle (1) is in a non-drive state as when the bicycle (1) is standing, the pedaling force (A) is small, or the bicycle (1) is freewheeling. In that state, the swing arm (55) is in the "tension-free state" with the throttle valve (36) is almost fully closed and with the projecting member (84) is in the "engage-stopped state." Here, the first switch (88) is off, the second switch (89) is on, and the brake detection means (76) is off as the brake device (16) is not operated. The off state of the brake detection means (76) causes the relay (90) to stop power supply from the battery (75) to the electric motor (85), and the electric motor (85) is held in the stopped state.

If the brake device (16) is operated while the bicycle (1) is in the non-drive state, the brake detection means (76) is turned on as shown with phantom lines in FIG. 8. This causes the relay (90) to supply power to the electric motor (85) so that the electric motor (85) is rotated in the reverse direction (F).

As the electric motor (85) rotates in the reverse direction (F), the projecting member (84) further projects, turns on the first switch (88), and turns off the second switch (89). As a result, the projecting member (84) is brought to the "disengaged state" as shown with phantom lines in the top drawing of FIG. 7, the electric circuit of the interlock canceling means (78) is set to the state shown with solid lines in FIG. 9, and the electric motor (85) is stopped.

In the state described above in which the projecting member (84) is in the "disengaged state," even if the pedaling force (A) is increased as by placing the foot on the pedal (28) and th swing arm (55) is brought to the "tension state," the throttle valve (36) is held to almost fully closed state. As a result, the power output of the engine (12) is prevented from suddenly increasing.

If the operation on the brake device (16) is released while the bicycle (1) is in the non-drive state, the brake detection means (76) is turned off as shown with phantom lines in FIG. 9. This causes the relay (90) to supply power from the battery (75) to the electric motor (85) as contraryay to the case described above and as shown with phantom lines in FIG. 9, and the electric motor (85) is rotated in the normal direction (E).

As the electric motor (85) rotates in the normal direction (E), the projecting member (84) further retracts into the movable body (83) to turn off the first switch (88) and turn on the second switch (89). This brings the projecting member (84) back to the "engage-stopped state" as shown with solid lines in the top drawing of FIG. 7, the electric circuit of the interlock canceling means (78) returns to the state shown with solid lines in FIG. 8, and the electric motor (85) is stopped.

When the rider intends to start running the bicycle (1) from the state shown with solid lines in the top drawing in FIG. 7 and FIG. 8 by increasing the pedaling force (A) on the pedal (28), the swing arm (55) is set to the "tension state" as shown in the middle drawing of FIG. 7, and the movable body (83) moves to the right. Here, since the projecting member (84) of the interlock canceling means (78) is in the "engage-stopped state," the throttle (36) opening is increased through the interlock canceling means (78) and the wire (59) of the interlock means (53), the power of the engine (12) is increased, and the bicycle (1) is set to the normal running state. Here, the electric circuit of the interlock canceling means (78) is held in the state shown with solid lines in FIG. 8.

If the brake device (16) is operated while applying the pedaling force (A) onto the pedal (28) with the bicycle in the running state as when making a U-turn, the swing arm (55) remains in the "tension state" and the brake detection means (76) is turned on as shown with phantom lines in FIG. 8. As a result, the electric motor (85) is rotated in the reverse direction (F) as shown in the bottom drawing of FIG. 7, the projecting member (84) is set to the "disengaged state," the electric circuit of the interlock canceling means (8) is brought to the state shown with solid lines in FIG. 9, the opening of the throttle valve (36) is made fully closed, and the power of the engine (12) is decreased.

The power of the engine (12) is unnecessary when a U-turn or the like is made, and unnecessary power loss is prevented by decreasing the opening of the throttle valve (36).

If the operation on the brake device (16) is released after finishing the U-turn or the like, the brake detection means (76) is turned off as shown with phantom lines in FIG. 9. This causes the relay (90) to supply electric power from the battery (75) to the electric motor (85) as shown with phantom lines in FIG. 9 so as to rotate the electric motor (85) in the normal direction (E).

The rotation of the electric motor (85) in the normal direction (E) sets the projecting member (84) again to the "engage-stopped state" as shown in the middle drawing of FIG. 7, the electric circuit of the interlock canceling means (78) returns to the stale shown with solid lines in FIG. 8, the opening of the throttle valve (36) is increased, and the normal running state is established.

In other words, with the interlock canceling means (78) described -above, as long as the braking operation is made on the brake device (16), the opening of the throttle valve (36) is fully closed and held, and the operation of the engine (12) is held to the idling state with the urging means (37) irrespective of the pedaling force (A). Here, as described before, the power of the engine (12) is prevented from being transmitted to the pedal crankshaft (24) because the centrifugal clutch (49c) is disengaged.

This invention has the following effects.

According to the invention, a power-assisted bicycle comprising front and rear wheels supported by a frame, a human power device having a pedal crankshaft provided with respective crank arms and pedals, an internal combustion engine having a carburettor provided with a throttle valve for power assistance, a resultant force device for combining both the output of the human power device and of the internal combustion engine, an interlock means for interlocking the throttle valve of said carburettor with the pedal crankshaft to increase or to decrease, respectively, the throttle valve opening in response to an increase or decrease, respectively, of the output of said human power device, and restriction means for restricting movement of the throttle valve, whereas said restriction means restrict the decrease of the throttle valve opening which is caused by a decrease in pedalling force, but allow unrestricted increase of the throttle valve opening when the pedalling force is increased, whereby the decrease of the throttle valve opening occurs at a speed slower than that when the throttle valve opening is increased.

Therefore, the throttle valve opening is automatically adjusted to increase or decrease in approximate proportion to the increase or decrease in the pedaling force applied to the pedal crankshaft, causing the power of the engine to increase or decrease for alleviating the physical effort on the part of the rider. The drive of the engine is automatically adjusted by the operation on the pedal crankshaft.

Therefore, operation such as twisting the handlebar grip is unnecessary and operation for running the bicycle is made easy.

Moreover, this invention provides opening decrease restriction means for restricting the decrease in the throttle opening accompanying the decrease in the pedaling force.

Therefore, the right and left pedals are depressed by turns by the rider and the pedaling force applied to the pedal crankshaft repeats increase and decrease cycle. With the opening decrease restriction means described above, however, the decrease in the throttle valve opening is restricted when the pedaling force is on the decrease and the decrease in the engine power is restricted when the pedaling force is on the decrease. That is to say, decrease in the "resultant power" is restricted.

In the conventional arrangement, when the pedaling force turns into the decrease, the throttle opening also decreases accordingly. Therefore, when the engine power decreases suddenly, the resultant power also decreases suddenly. In this invention, however, jerky run of the bicycle is prevented to improve the ride feeling on the bicycle. According to another embodiment of the invention the above mentioned bicycle with an assist engine further comprises:
urging means for urging the throttle valve so that the throttle valve opening is decreased,
a brake device capable of braking the wheels,
brake detection means for detecting the operation of the brake device, and
interlock canceling means for canceling the interlock of the throttle valve with the pedal crankshaft established with the interlock means by receiving detection signals from the brake detection means.

Therefore, as long as the braking operation is made on the brake device the interlock canceling means works and the opening of the throttle valve is fully closed and held, and the operation of the engine is held to the idling state with the urging means irrespective of the pedaling force.

Therefore, when the engine power is unnecessary because the brake device is operated while the bicycle is stopped or braked during running, the engine is prevented from outputting unnecessary power.

## Claims

1. A power-assisted bicycle (1) comprising front and rear wheels (4,7) supported by a frame (2), a human power device (11) having a pedal crankshaft (24) provided with respective crank arms (27) and pedals (28), an internal combustion engine (12) having a carburettor (31) provided with a throttle valve (36) for power assistance, a resultant force device (13) for combining both the output of the human power device (11) and of the internal combustion engine (12), an interlock means (53) for interlocking the throttle valve (36) of said carburettor (31) with the pedal crankshaft (24) to increase or to decrease, respectively, the throttle valve opening in response to an increase or decrease, respectively, of the output of said human power device (11), and restriction means (63) for restricting movement of the throttle valve (36), **characterized in that** said restriction means (63) restrict the decrease of the throttle valve opening which is caused by a decrease in pedaling force, but allow unrestricted increase of the throttle valve opening when the pedaling force is increased, whereby the decrease of the throttle valve opening occurs at a speed slower than that when the throttle valve opening is increased.

2. A power-assisted bicycle as defined in claim 1, **characterised by** an urging means (37) for resiliently forcing the throttle valve (36) to its closing position.

3. A power-assisted bicycle according to claim 1 or 2, **characterized in that** the resultant force device (13) comprises a planetary gear mechanism (42), a sun gear (43) of which is engagable by said restriction means (63).

4. A power-assisted bicycle according to claim 3, **characterized in that** said interlock means (53) comprises a rotation restriction means (50) capable to prevent the sun gear (43) from rotating in a normal direction (B) of said pedal crankshaft (24) by means of a pressing contact between said rotation restriction means (50) and said sun gear (43).

5. A power-assisted bicycle according to claim 4, **characterized in that** said rotation restriction means (50) comprises a swing arm (55) supported by a pivot shaft (54), one end (56) of said swing arm (55) is capable of coming into pressing contact with said sun gear (43) by means of an urging means (57), whereas the other end (58) of said swing arm (55) is interlocked with said throttle valve (36).

6. A power-assisted bicycle according to at least one of the preceding claims 3 to 5, **characterized in that** said restriction means (63) comprises a cylinder (64) having an axially slidable piston (65), said piston (65) is provided with a piston rod (66) projecting from said cylinder (64) for coming into contact with said sun gear (43) and dividing said cylinder (64) into a first chamber (67) opposite to said piston rod (66) and into a second chamber (68) at the piston rod side of said piston (65).

7. A power-assisted bicycle according to claim 6, **characterized in that** said piston (65) is provided with first hole (70) having a larger diameter than a second hole (71) for fluid communication between said two chambers (67,68), whereas the moving speed of said piston (65) to the piston rod side is faster than the opposite moving speed.

8. A power-assisted bicycle according to claim 7, **characterized in that** the first hole (70) is provided with a reed valve (72) at the first chamber side and that the first chamber (67) comprises a spring (73) for resiliently urging said piston (65) in a direction towards said second chamber (68).

9. A power-assisted bicycle according to at least one of the preceding claims 6 to 8, **characterized in that** said cylinder (64) is provided with a stop (74) for restricting the movement of the piston (65) in the direction towards the first chamber (67).

10. A power-assisted bicycle according to at least one of preceding claims 1 to 9, **characterized by** interlock cancelling means (78) for interrupting the interlock between the throttle valve (36) and the pedal crankshaft (24) in response to the operation of the brake device (16) detected by a brake detection means (76).

11. A power-assisted bicycle according to claim 10, **characterized in that** said interlock means (53) comprises a wire (59) and a sheath (60) and that said interlock cancelling means (78) is interposed between respective ends (59a,60a) of said wire (59) and said sheath (60), respectively.

12. A power-assisted bicycle according to claim 11, **characterized in that** said interlock cancelling means (78) has an interlock cancelling mechanism (79) comprising a cylindrical body (80), both axial ends of which are connected to the respective ends (60a) of said sheath (60), a movable set (82) slidingly received within said cylindrical body (80) for a movement in axial direction of said cylindrical body (80) and connected to the respective ends (59a) of said wire (59), and a means (83,84,85) for operating said movable set (82) to interrupt or activate, respectively, the interlock between the throttle valve (36) and the pedal crankshaft (24).

13. A power-assisted bicycle according to claim 12, **characterized in that** said movable set (82) comprises a cylindrical movable body (83), a rod-shaped projecting member (84) capable of coming out and retracting into one end of the movable body (83) by means of an electric motor (85) disposed within said movable body (83) via a screw jack (86), whereas one end (59a) of the respective ends (59a) of said wire (59) is connected to an end of said movable body (83) and the other end (59a) of said respective ends (59a) of the wire (59) is disengagably connected to the projecting end of said projecting member (84).

14. A power-assisted bicycle according to claim 13, **characterized by** first and second switches (88,89) for switching on and off said electric motor (85) in response to the interrupted of activated state, respectively, of said interlock cancelling means (78) and the position of said projecting member (84) with respect to both the cylinder movable body (83) and the cylindrical body (80).

## Patentansprüche

1. Ein Fahrrad (1) mit Hilfsantrieb, mit Vorder- und Hinterrädern (4,7), die von einem Rahmen (2) getragen werden, einer Menschenkrafteinrichtung (11), die eine mit entsprechenden Kurbelarmen (27) und Pedalen (28) versehene Pedalkurbelwelle (24) aufweist, mit einer Brennkraftmaschine (12) zur Kraftunterstützung, die einen Vergaser (31) aufweist, der mit einem Drosselventil (36) versehen ist, mit einer resultierenden Krafteinrichtung (13) zum Kombinieren beider Ausgänge von der Menschenkrafteinrichtung (11) und der Brennkraftmaschine (12), mit einer Verriegelungseinrichtung (53) zum Verriegeln des Drosselventils (36) von diesem Vergaser (31) mit der Pedalkurbelwelle (34), um die Drosselventilöffnung in Abhängigkeit von dem Anstieg bzw. dem Abfall des Ausgangs der Menschenkrafteinrichtung (11) zu erhöhen bzw. abzusenken, und mit Begrenzungseinrichtungen zum Begrenzen der Bewegung des Drosselventils (36), **dadurch gekennzeichnet,** dass die Begrenzungseinrichtungen den Abfall der Drosselventilöffnung beschränken, welche verursacht wird durch einen Abfall der Pedalkraft, aber einen unbegrenzten Anstieg der Drosselventilöffnung zulässt, wenn die Pedalkraft ansteigt, wobei der Abfall der Drosselventilöffnung bei einer Geschwindigkeit auftritt, die geringer ist als diejenige, wenn die Drosselventilöffnung sich vergrößert.

2. Ein Fahrzeug mit Hilfsantrieb nach Anspruch 1, **gekennzeichnet durch** ein Unterstützungsmittel (37) zum elastischen Drücken des Drosselventils (36) in seine geschlossene Position.

3. Ein Fahrrad mit Hilfsantrieb nach Anspruch 1 oder 2, **dadurch gekennzeichnet,** dass die resultierende Krafteinrichtung (13) einen Planetengetriebemechanismus (42) aufweist, von welchem ein Sonnenrad (43) mit der Begrenzungseinrichtung (63) in Eingriff bringbar ist.

4. Ein Fahrrad mit Hilfsantrieb nach Anspruch 3, **dadurch gekennzeichnet,** dass diese Verriegelungseinrichtung (53) eine Rotationsbegrenzungseinrichtung (50) enthält, die in der Lage ist, das Sonnenrad (43) an einer Rotation in einer normalen Richtung (B) von dieser Pedalkurbelwelle (24) mit Hilfe eines Presskontaktes zwischen der Rotationsbegrenzungseinrichtung (50) und dem Sonnenrad (43) zu hindern.

5. Ein Fahrrad mit Hilfsantrieb nach Anspruch 4, **dadurch gekennzeichnet,** dass diese Rotationsbegrenzungseinrichtung (50) einen Schwenkarm (55) aufweist, der von einer Schwenkwelle (54) gehalten wird, wobei ein Ende (56) des Schwenkarmes (55) in der Lage ist, in Presskontakt mit dem Sonnenrad (43) mit Hilfe von einer Unterstützungseinrichtung (57) zu gelangen, während das andere Ende (58) des Schwenkarmes (55) mit diesem Drosselventil (36) verriegelt ist.

6. Fahrzeug mit Hilfsantrieb nach zumindest einem der vorstehenden Ansprüche 3 bis 5, **dadurch gekennzeichnet,** dass die Begrenzungseinrichtung (63) einen Zylinder (64) aufweist, mit einem axial gleitenden Kolben (65), wobei dieser Kolben (65) mit einer Kolbenstange (66) versehen ist, die sich von diesem Zylinder (64) erstreckt, um in Kontakt mit diesem Sonnenrad (43) zu gelangen, und diesen Zylinder (64) in eine erste Kammer (67) entgegengesetzt der Kolbenstange (66) und in eine zweite Kammer (68) auf der Kolbenstangenseite von diesem Kolben (65) aufteilt.

7. Fahrrad mit Hilfsantrieb nach Anspruch 6, **dadurch gekennzeichnet**, dass dieser Kolben (65) mit einem ersten Loch (70) versehen ist, das einen größeren Durchmesser als ein zweites Loch (71) aufweist zur Fluidkommunikation zwischen diesen zwei Kammern (67,68), wobei die Bewegungsgeschwindigkeit von diesem Kolben (65) zu der Kolbenstangenseite größer ist als die entgegengesetzte Bewegungsgeschwindigkeit.

8. Fahrrad mit Hilfsantrieb nach Anspruch 7, **dadurch gekennzeichnet,** dass das erste Loch (70) mit einem Klappenventil (72) versehen ist, und zwar an der Seite der ersten Kammer, und dass die erste Kammer (67) eine Feder (73) aufweist, um den Kolben (65) elastisch in eine Richtung auf die zweite Kammer (68) zu zu bewegen.

9. Fahrrad mit Hilfsantrieb nach zumindest einem der vorstehenden Ansprüche 6 bis 8, **dadurch gekennzeichnet,** dass dieser Zylinder (64) mit einem Stopper (74) versehen ist, um die Bewegung des Kolbens (65) in Richtung auf die erste Kammer (67) zu einzuschränken.

10. Fahrrad mit Hilfsantrieb nach zumindest einem der vorstehenden Ansprüche 1 bis 9, **gekennzeichnet durch** Verriegelungsaufhebungseinrichtungen (78), um die Verriegelung zwischen dem Drosselventil (36) und der Pedalkurbelwelle (24) in Abhängigkeit von der Betätigung der Bremseinrichtung (16), die von einer Bremserfassungseinrichtung (76) erfasst wird, zu unterbrechen.

11. Fahrrad mit Hilfsantrieb nach Anspruch 10, **dadurch gekennzeichnet,** dass diese Verriegelungseinrichtung (53) einen Draht (59) und eine Hülse (60) aufweist, und dass diese Verriegelungsaufhebungseinrichtung (78) zwischen entsprechenden Enden (59a, 60a) von diesem Draht (59) und von dieser Hülse (60) entsprechend angeordnet ist.

12. Fahrrad mit Hilfsantrieb nach Anspruch 11, **dadurch gekennzeichnet,** dass diese Verriegelungsaufhebungseinrichtung (78) einen Verriegelungsaufhebungsmechanismus (79) aufweist mit einem zylindrischen Körper (80), wobei beide axialen Enden davon an entsprechenden Enden (60a) von dieser Hülse (60) angeschlossen sind, dass eine bewegbare Einrichtung (82) gleitend innerhalb des zylinderförmigen Körpers (80) aufgenommen ist für eine Bewegung in axialer Richtung von diesem zylinderförmigen Körper (80) und an den entsprechenden Enden (59a) von diesem Draht (59) angeschlossen ist, und dass eine Einrichtung (83,84,85) vorhanden ist zum Betreiben der bewegbaren Einrichtung (82), um die Verriegelung zwischen dem Drosselventil (36) und der Pedalkurbelwelle (24) zu unterbrechen bzw. zu aktivieren.

13. Fahrrad mit Hilfsantrieb nach Anspruch 12, **dadurch gekennzeichnet,** dass diese bewegbare Einrichtung (82) aufweist, einen zylinderförmigen bewegbaren Körper (83), ein stabförmiges hervorragendes Element (84), das in der Lage ist, aus einem Ende von dem bewegbaren Körper (83) mittels eines Elektromotors (85), der innerhalb dieses bewegbaren Körpers (83) über eine Schraubenspindel hineinzugelangen und auch wieder in Eingriff zu gelangen in der Lage ist, wobei ein Ende (59) von den entsprechenden Enden (59a) von diesem Draht (59) an einem Ende von diesem bewegbaren Körper (83) angeschlossen ist und das andere Ende (59a) von den entsprechenden Enden (59a) von diesem Draht (59) lösbar an dem vorspringenden Ende von diesem vorspringenden Element (84) angeschlossen ist.

14. Fahrrad mit Hilfsantrieb nach Anspruch 13, **gekennzeichnet durch** erste und zweite Schalter (88,89) zum Ein- und Ausschalten des Elektromotors (85) in Abhängigkeit von dem unterbrochenen bzw. aktivierten Status von dieser Verriegelungsaufhebungseinrichtung (78) und von der Position von diesem hervorragenden Element (84) in Abhängigkeit sowohl von dem zylinderförmigen bewegbaren Körper (83) als auch dem zylinderförmigen Körper (80).

## Revendications

1. Bicyclette à assistance motorisée (1) comprenant des roues avant et arrière (4, 7) supportées par un cadre (2), un dispositif à force motrice humaine (11) comportant un axe de pédalier (24) muni de manivelles (27) et de pédales (28) respectives, un moteur à combustion interne (12) comportant un carburateur (31) muni d'un papillon des gaz (36) destiné à une assistance motorisée, un dispositif à force résultante (13) destiné à la combinaison à la fois de la sortie du dispositif à force motrice humaine (11) et du moteur à combustion interne (12), des moyens de verrouillage (53) destinés à verrouiller le papillon des gaz (36) dudit carburateur (31) avec l'axe de pédalier (24) afin d'augmenter ou de diminuer, respectivement, l'ouverture du papillon des gaz en réponse, respectivement, à une augmentation ou à une diminution de la sortie du dispositif à force motrice humaine (11), et des moyens de limitation (63) destinés à limiter le déplacement du papillon des gaz (36), caractérisée en ce que lesdits moyens de limitation (63) limitent la diminution de l'ouverture du papillon des gaz qui est provoquée par une diminution de la force de pédalage, mais permettent une augmentation sans limitation de l'ouverture du papillon des gaz lorsque la force de pédalage est accrue, ce qui permet la diminution de l'ouverture du papillon des gaz à une vitesse inférieure à celle où se produit l'augmentation de l'ouverture du papillon des gaz.

2. Bicyclette à assistance motorisée selon la revendication 1, caractérisée par des moyens de poussée (37) destinés à pousser de manière élastique le papillon des gaz (36) dans sa position de fermeture.

3. Bicyclette à assistance motorisée selon la revendication 1 ou la revendication 2, caractérisée en ce que le dispositif à force résultante (13) comprend un mécanisme à engrenage planétaire (42), dont un pignon solaire (43) peut être engagé par lesdits moyens de limitation (63).

4. Bicyclette à assistance motorisée selon la revendication 3, caractérisée en ce que lesdits moyens de verrouillage (53) comprennent des moyens de limitation de rotation (50) capables d'empêcher le pignon solaire (43) de tourner dans un sens normal (B) dudit axe de pédalier (24) au moyen d'un contact par pression entre lesdits moyens de limitation de rotation (50) et ledit pignon solaire (43).

5. Bicyclette à assistance motorisée selon la revendication 4, caractérisée en ce que lesdits moyens de limitation de rotation (50) comprennent un bras oscillant (55) supporté par un axe de pivotement (54), une extrémité (56) dudit bras oscillant (55) est capable de venir en contact par pression avec ledit pignon solaire (43) à l'aide de moyens de poussée (57), alors que l'autre extrémité (58) dudit bras oscillant (55) est verrouillée avec ledit papillon des gaz (36).

6. Bicyclette à assistance motorisée selon au moins l'une des revendications précédentes 3 à 5, caractérisée en ce que lesdits moyens de limitation (63) comprennent un cylindre (64) comportant un piston en coulissement axial (65), ledit piston (65) comporte une bielle (66) en saillie à partir dudit cylindre (64) afin de venir en contact avec ledit pignon solaire (43) et de séparer ledit cylindre en une première chambre (67) opposée à ladite bielle (66) et en une seconde chambre (68) du côté de la bielle dudit piston (65).

7. Bicyclette à assistance motorisée selon la revendication 6, caractérisée en ce que ledit piston (65) comporte un premier orifice (70) dont le diamètre est plus grand que celui d'un second orifice (71) destiné à une communication de fluide entre lesdites deux chambres (67, 68), alors que la vitesse de déplacement dudit piston (65) du côté de la bielle est plus élevée que la vitesse de déplacement du côté opposé.

8. Bicyclette à assistance motorisée selon la revendication 7, caractérisée en ce que le premier orifice (70) comporte un contact à lame (72) situé du côté de la première chambre et en ce que la première chambre (67) comprend un ressort (73) destiné à pousser de manière élastique ledit piston (65) dans la direction de ladite seconde chambre (68).

9. Bicyclette à assistance motorisée selon au moins l'une des revendications précédentes 6 à 8, caractérisée en ce que ledit cylindre (64) comporte une butée (74) destinée à limiter le déplacement du piston (65) dans la direction de la première chambre (67).

10. Bicyclette à assistance motorisée selon au moins l'une des revendications précédentes 1 à 9, caractérisée par des moyens d'annulation de verrouillage (78) destinés à interrompre le verrouillage entre le papillon des gaz (36) et l'axe de pédalier (24) en réponse au fonctionnement du dispositif de freinage (16) détecté par des moyens de détection de freinage (76).

11. Bicyclette à assistance motorisée selon la revendication 10, caractérisée en ce que lesdits moyens de verrouillage (53) comprennent un câble (59) et une gaine (60) et en ce que lesdits moyens d'annulation de verrouillage (78) sont disposés entre les extrémités respectives (59a, 60a) dudit câble (59) et de ladite gaine (60), respectivement.

12. Bicyclette à assistance motorisée selon la revendication 11, caractérisée en ce que lesdits moyens d'annulation de verrouillage (78) comportent un mécanisme d'annulation de verrouillage (79) se composant d'un corps cylindrique (80) dont les deux extrémités axiales sont connectées aux extrémités respectives (60a) de ladite gaine (60), un ensemble mobile (82) reçu en coulissement à l'intérieur dudit corps cylindrique (80) afin de se déplacer dans le sens axial dudit corps cylindrique (80) et connecté aux extrémités respectives (59a) dudit câble (59), et des moyens (83, 84, 85) destinés à actionner ledit ensemble mobile (82) afin d'interrompre ou d'actionner, respectivement, le verrouillage entre le papillon des gaz (36) et l'axe de pédalier (24).

13. Bicyclette à assistance motorisée selon la revendication 12, caractérisée en ce que ledit ensemble mobile (82) se compose d'un corps cylindrique mobile (83), d'un élément en saillie en forme de tige (84) capable de sortir d'une extrémité du corps mobile (83) et de se rétracter à l'intérieur de celui-ci au moyen d'un moteur électrique (85) disposé à l'intérieur dudit corps mobile (83) par l'intermédiaire d'un vérin à vis (86), alors qu'une extrémité (59a) des extrémités respectives (59a) dudit câble (59) est connectée à une extrémité dudit corps mobile (83) et que l'autre extrémité (59a) desdites extrémités respectives (59a) du câble (59) est connectée de manière à pouvoir se dégager à l'extrémité en saillie dudit élément en saillie (84).

14. Bicyclette à assistance motorisée selon la revendication 13, caractérisée par un premier et par un second commutateur (88, 89) destinés à actionner et à couper ledit moteur électrique (85) respectivement en réponse à l'état d'actionnement ou d'interruption desdits moyens d'annulation de verrouillage (78) et à la position dudit élément en saillie (84) par rapport à la fois au corps cylindrique mobile (83) et au corps cylindrique (80).
